# DEMANDE DE BREVET EUROPEEN

(11) **EP 0 860 116 A1**
(43) Date de publication de la demande: **26.08.1998**
(21) Numéro de dépôt: 98400307.9
(22) Date de dépôt: 11.02.1998
(51) Int. Cl.: A01M 29/00

(54) **Dispositif agencé pour repousser les oiseaux**

(30) Priorité: 19.02.1997 FR 9701967
(71) Demandeur: Sertep, 77290 Mitry-Mory (FR)
(72) Inventeur: Berger, Jean-Louis, 77290 Mitry-Mory (FR); Berger, Nicolas, 77290 Mitry-Mory (FR)
(74) Mandataire: Benech, Frédéric

(57) **Abrégé**

L'invention concerne un dispositif (1) agencé pour repousser les oiseaux cherchant à se poser sur un bâtiment, comprenant un générateur (2) d'impulsions électriques, au moins un jeu de deux lignes de protection, à savoir une ligne (3) connectée à la borne positive (4) du générateur et une ligne (5) connectée à la borne négative (6) du générateur, et au moins deux supports isolants desdites lignes propres à être fixés à distance l'un de l'autre sur le bâtiment. Chaque support comporte au moins deux goulottes de fixation, à savoir une première goulotte de fixation de la ligne connectée à la borne positive et au moins une seconde goulotte de fixation de la ligne connectée à la borne négative, lesdites goulottes étant situées de part et d'autre, et fixées l'une à l'autre par l'intermédiaire d'une plaque séparatrice isolante solidaire d'un socle de fixation.

## Description

La présente invention concerne un dispositif agencé pour repousser les oiseaux cherchant à se poser sur un bâtiment, comprenant un générateur d'impulsions électriques, au moins un jeu de deux lignes de protection, à savoir une ligne connectée à la borne positive du générateur et une ligne connectée à la borne négative du générateur, et au moins deux supports isolants desdites lignes, propres à être fixés à distance l'un de l'autre sur le bâtiment.

Elle trouve une application particulièrement importante bien que non exclusive dans le domaine de la protection des bâtiments contre les pigeons et autres volatiles, en particulier pour protéger les façades et les ornements d'architecture qui sont rapidement maculés par les volatiles si ces derniers ne sont pas empêchés de venir s'y poser.

Une telle protection nécessite un système d'une part non dangereux pour les oiseaux qui ne doivent subir aucun dommage et d'autre part non dégradant pour la bâtiment lui-même.

On connaît déjà des dispositifs de ce type.

Ils concernent essentiellement l'alimentation électrique proprement dite.

Les supports des lignes véhiculant l'électricité sont par contre peu élaborés et présentent plusieurs inconvénients.

Ils sont peu aisés à fixer, difficiles à dissimuler, et générateurs de courts-circuits.

De plus, ils n'autorisent pas une pause adaptée en fonction des besoins et des dispositions de la façade à protéger.

La présente invention vise à fournir un dispositif de protection répondant mieux que ceux antérieurement connus aux exigences de la pratique notamment en ce qu'elle propose des supports de fixation servant d'isolateurs agencés pour canaliser l'eau de pluie de façon à éviter les courts-circuits, lesdits supports étant aisés à fixer et à mettre en oeuvre.

Ils sont de plus discrets. Leur fabrication est peu coûteuse et autorise une adaptation à la façade existante grâce à la réduction possible des dimensions du support.

Dans ce but la présente invention propose un dispositif agencé pour repousser les oiseaux cherchant à se poser sur un bâtiment, comprenant un générateur d'impulsions électriques, au moins un jeu de deux lignes de protection, à savoir une ligne connectée à la borne positive du générateur et une ligne connectée à la borne négative du générateur, et au moins deux supports isolants desdites lignes propres à être fixés à distance l'un de l'autre sur le bâtiment, caractérisé en ce que chaque support comporte au moins deux goulottes de fixation, à savoir une première goulotte de fixation de la ligne connectée à la borne positive et au moins une seconde goulotte de fixation de la ligne connectée à la borne négative, lesdites goulottes étant situées de part et d'autre, et fixées l'une à l'autre par l'intermédiaire, d'une plaque séparatrice isolante solidaire d'un socle de fixation.

Dans des modes de réalisation avantageux on a de plus recours à l'une et/ou à l'autre des dispositions suivantes :
- le socle de fixation sur le bâtiment est en forme de pavé plat, et la plaque séparatrice forme avec le plan du socle un angle compris entre de l'ordre de 30° et une valeur strictement inférieure à 90°;
- l'angle de la plaque séparatrice avec le socle est de l'ordre de 45°;
- la première goulotte est de section sensiblement circulaire, ouverte vers l'extérieur de la plaque séparatrice et munie de deux lèvres de rétention de la ligne, lesdites lèvres permettant le montage amovible de la ligne par encliquetage;
- le support comporte trois goulottes, à savoir ladite première goulotte, une première seconde goulotte dite supérieure, sensiblement au même niveau que la première goulotte et adjacente à la plaque séparatrice, et au moins une deuxième seconde goulotte dite inférieure, entièrement à distance de ladite plaque séparatrice;
- la deuxième seconde goulotte est constituée par un évidement de section sensiblement rectangulaire ou en queue d'aronde réalisé dans, et traversant transversalement de part en part, la face inférieure du socle de fixation apte à être en contact avec le bâtiment;
- le support comprend une troisième seconde goulotte entièrement à distance de la plaque séparatrice, de forme identique et d'axe parallèle à la première goulotte et à la première seconde goulotte;
- le socle de fixation comporte une zone transversale rectiligne frangible permettant la séparation par cassure du socle, entre d'un côté la première et la première seconde goulotte, solidaire de la plaque de séparation et de l'autre côté le ou les deuxièmes secondes goulottes;
- le support est d'une pièce;
- le support est moulé par injection.

La présente invention sera mieux comprise à la lecture de la description d'un mode de réalisation donné ci-après à titre non limitatif.

La description se réfère aux dessins qui l'accompagnent dans lesquels :
- La figure 1 est une vue en perspective d'un mode de réalisation du dispositif selon l'invention.
- La figure 2 est une vue latérale d'un support selon le mode de réalisation de la figure 1.
- La figure 3 est une vue selon la flèche III du support de la figure 2.
- La figure 4 est une vue de dessus du support de la figure 2.
- La figure 5 est un schéma électrique d'un mode de réalisation du générateur d'impulsions du dispositif de la figure 1.

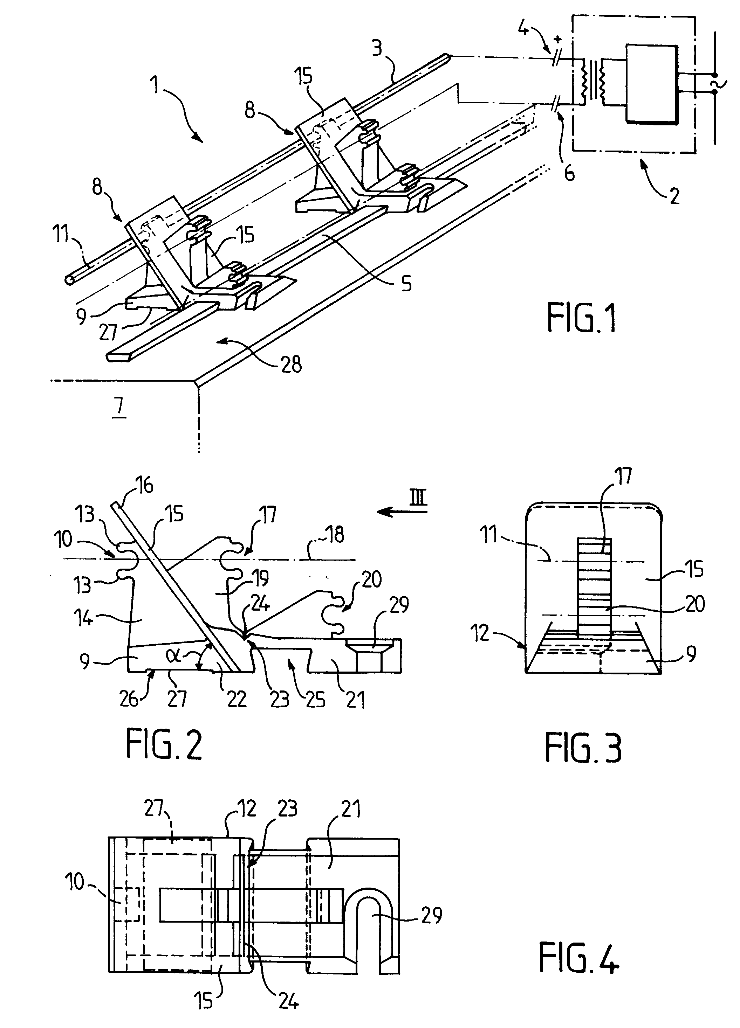

La figure 1 montre un dispositif 1 agencé pour repousser les oiseaux, comprenant un générateur 2 d'impulsions électriques, connecté au secteur, et deux lignes de protection, à savoir une ligne conductrice 3 par exemple en acier inoxydable connectée à la borne positive 4 du générateur 2 et une ligne conductrice 5 également en acier inoxydable, connectée à la borne négative 6 du générateur, qui correspond ici à la masse.

Les lignes conductrices 3 et 5 sont par exemple formées par des fils de 3 mm de diamètre et avantageusement de 1,6 mm.

Selon l'invention, les lignes 3 et 5 sont supportées et maintenues en place sur le bâtiment 7 par des supports de fixation 8, d'une pièce, en matériau plastique isolant, par exemple obtenus par moulage par injection, en polycarbonate transparent.

Les supports 8 vont également être détaillés en référence aux figures 2, 3 et 4.

Chaque support 8 comporte un pied ou socle 9 formant l'embase du support, en forme de pavé plat rectangulaire, par exemple de 3 cm sur 2 cm, d'épaisseur sensiblement constante, par exemple de 5 mm d'épaisseur.

Le support 8 comprend une première goulotte 10 propre à recevoir la ligne 3 reliée à la borne positive.

La goulotte 10 est située vers le haut du support, par exemple à une hauteur de 2 cm par rapport à la face inférieure du socle.

Plus précisément la goulotte 10 est en forme de portion de cylindre de 5 mm de hauteur, d'axe 11 parallèle au plan du pavé du socle et perpendiculaire au côté 12 dudit socle situé dans le sens longitudinal de ce dernier.

La goulotte est ouverte vers l'extérieur du support sur le côté, et munie de deux lèvres 13 de rétention de la ligne permettant l'encliquetage de cette dernière entre ces deux lèvres formant mâchoires.

La goulotte 10 est solidaire du support via une portion 14 en cornière triangulaire avec laquelle elle forme une saillie latérale en porte à faux.

Selon le mode de réalisation l'invention plus particulièrement décrit ici la portion 14 s'adosse à une plaque isolante de séparation 15.

La plaque 15 est rectangulaire ou sensiblement rectangulaire, par exemple de l'ordre de 1 mm d'épaisseur, et de 1,5 cm de largeur, la portion 14 étant centrée par rapport à ladite plaque, qui est elle-même, et par exemple, en forme de losange ou de trapèze isocèle en partie haute.

Dans le mode de réalisation plus particulièrement décrit ici, la plaque 15 forme un angle α de l'ordre de 45° avec le plan du socle, et comporte une partie en surplomb 16 s'étendant au-dessus de la goulotte 10.

Le support comprend également une première seconde goulotte 17 identique à la première goulotte, inversée et située de l'autre côté, par rapport à la plaque séparatrice 15.

Cette seconde goulotte 17 est sensiblement dans le même plan horizontal 18 que la première goulotte et est solidaire de la plaque séparatrice via une portion de cornière triangulaire 19 adossée à ladite plaque.

Le support 8 plus particulièrement décrit ici comprend une deuxième seconde goulotte 20 identique à le première seconde goulotte et située entièrement à distance de la plaque 15, par exemple à 2 cm du pied de cette plaque.

La goulotte 20 est solidaire d'une partie 21 du socle, séparée de la partie 22 solidaire de la plaque, par une portion 23, frangible, obtenue d'une part par une rainure transversale 24 de fragilisation, et d'autre part par une épaisseur réduite du socle à l'emplacement de la rainure du fait d'une troisième seconde goulotte 25.

La troisième seconde goulotte 25 est formée par un évidement transversal dans la face inférieure du socle, traversant ce dernier de part en part sur toute sa largeur, parallèlement aux axes des autres goulottes.

La goulotte 25 est de section en forme de queue d'aronde, et permet de recevoir la ligne 5 en forme de barre, de section complémentaire à celle de la goulotte.

Dans ce cas la ligne est en contact avec la surface du bâtiment et constitue le pôle négatif et/ou neutre par mise à la masse via le bâtiment.

Le socle 9 est fixé au bâtiment soit par collage de la face 26, dans laquelle est par exemple ménagé un léger creux transversal 27 pour ladite colle, sur la surface 28 du bâtiment 7, soit par vis (non représentée) coopérant avec un orifice de fixation 29, ou tout autre moyen.

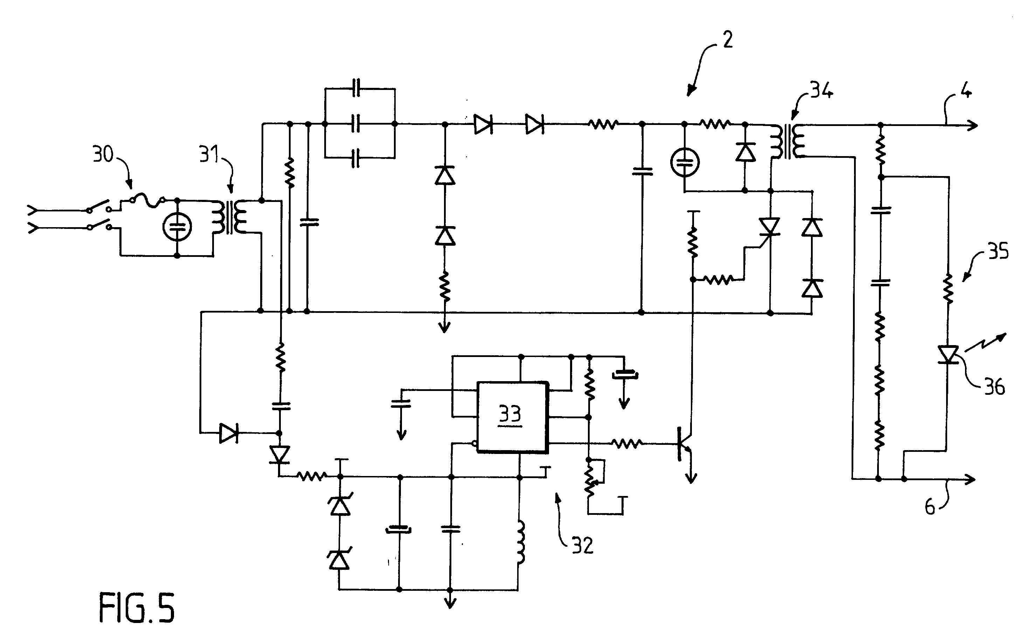

On a représenté sur la figure 5 un schéma électrique du générateur 2 d'impulsion (Cf. également figure 1) connecté en 4 (borne positive) à la ligne cylindrique 3 fixée dans les goulottes supérieures 9 des supports 8, et en 6 (borne négative) ou mise à la terre à la ligne 5 constituée par une barre insérée dans les évidements 25 desdits supports.

Le générateur 2 comprend de façon connue en elle-même une alimentation 30, un premier transformateur 31, un circuit 32 à semi-conducteur 33 convenablement protégé, permettant de générer des impulsions électriques à haute tension grâce à un second circuit transformateur 34.

Un système 35 de signalisation de fonctionnement avec diode 36 est par exemple également prévu.

On va maintenant décrire le montage et le fonctionnement d'un dispositif selon l'invention.

L'opérateur détermine tout d'abord la dimension des supports à utiliser, leur emplacement et les modes de fixation (collage ou par vis) sur le bâtiment.

Il met les supports à dimension si nécessaire en en cassant une partie grâce à la zone frangible.

Puis il les fixe, par exemple après mise en place préalable dans les évidements 25 de la barre de mise à la terre ou de branchement à la borne négative du générateur, et s'il y a lieu.

La ligne positive formée par un fil cylindrique rigide en acier inoxydable est ensuite encliquetée latéralement dans la goulotte 10.

Puis l'ensemble est raccordé au générateur qui est réglé pour délivrer des impulsions haute tension (6KV) d'intensité réduite.

L'oiseau qui se pose sur les perchoirs naturels constitués par les lignes 3 ou 5 crée un court-circuit. Il reçoit alors une décharge de courant haute tension ce qui le fait partir.

Comme il va de soi et comme il résulte d'ailleurs de ce qui précède la présent invention ne se limite pas au mode de réalisation plus particulièrement décrit. Elle en embrasse au contraire toutes les variantes et notamment celles où les lignes sont identiques entre elles et encliquetées sur les goulottes à lèvres, le cas où le générateur est différent de celui décrit, le cas où le socle du support est agencé pour permettre une fixation sur une surface irrégulière, en pente et/ou verticale.

Grâce à l'invention, les courts-circuits accidentels notamment dus à la remontée de l'eau de pluie ou de condensation par capillarité sont évités, ce qui est un avantage important, les supports et les lignes électriques étant en plein air et donc soumis en permanence aux intempéries.

## Revendications

1. Dispositif (1) agencé pour repousser les oiseaux cherchant à se poser sur un bâtiment (7), comprenant un générateur (2) d'impulsions électriques, au moins un jeu de deux lignes (3, 5) de protection, à savoir une ligne (3) connectée à la borne positive (4) du générateur et une ligne (5) connectée à la borne négative (6) du générateur, et au moins deux supports (8) isolants desdites lignes propres à être fixés à distance l'un de l'autre sur le bâtiment, caractérisé en ce que chaque support (8) comporte au moins deux goulottes de fixation, à savoir une première goulotte (10) de fixation de la ligne (3) connectée à la borne positive et au moins une seconde goulotte (7, 20, 25) de fixation de la ligne (5) connectée à la borne négative (6), lesdites goulottes étant situées de part et d'autre, et fixées l'une à l'autre par l'intermédiaire d'une plaque séparatrice (15) isolante solidaire d'un socle (9) de fixation.

2. Dispositif selon la revendication 1, caractérisé en ce que le socle (9) de fixation sur le bâtiment est en forme de pavé plat, et en ce que la plaque séparatrice (15) forme avec le plan du socle un angle α compris entre de l'ordre de 30° et une valeur strictement inférieure à 90°.

3. Dispositif selon la revendication 2, caractérisé en ce que l'angle α de la plaque séparatrice (15) avec le socle (9) est de l'ordre de 45°.

4. Dispositif selon l'une quelconque des revendications précédentes, caractérisé en ce que la première goulotte (10) est de section sensiblement circulaire, ouverte vers l'extérieur de la plaque séparatrice et munie de deux lèvres (13) de rétention de la ligne permettant le montage amovible de ladite ligne par encliquetage.

5. Dispositif selon l'une quelconque des revendications précédentes, caractérisé en ce qu'il comporte trois goulottes (10), à savoir ladite première goulotte (17), une première seconde goulotte dite supérieure, sensiblement au même niveau que la première goulotte et adjacente à la plaque séparatrice, et une deuxième seconde goulotte (20, 25) dite inférieure, entièrement à distance de ladite plaque séparatrice (15).

6. Dispositif selon la revendication 5, caractérisé en ce que la deuxième seconde goulotte (25) est constituée par un évidement de section sensiblement rectangulaire ou en queue d'aronde réalisé dans la face inférieure (26) du socle (9) de fixation apte à être en contact avec le bâtiment.

7. Dispositif selon l'une quelconque des revendications 5 et 6, caractérisé en ce qu'il comprend une troisième seconde goulotte (20) entièrement à distance de la plaque séparatrice, de forme identique à la première goulotte et à la première seconde goulotte.

8. Dispositif selon l'une quelconque des revendications 5 à 7, caractérisé en ce que le socle (9) de fixation comporte une zone transversale rectiligne frangible (23), permettant la séparation par cassure du socle entre d'un côté la première goulotte et la première seconde goulotte solidaires de la plaque de séparation, et de l'autre côté la ou les secondes goulottes.

9. Dispositif selon l'une quelconque des revendications précédentes, caractérisé en ce que le support (9) est d'une pièce, moulé par injection.
